# EUROPEAN PATENT SPECIFICATION

(11) **EP 2 780 988 B1**
(45) Date of publication and mention of the grant of the patent: **16.08.2017**
(21) Application number: 11875609.7
(22) Date of filing: 18.11.2011
(51) Int. Cl.: H01R 41/02, B64C 9/22, B64D 15/12

(54) **METHOD AND ARRANGEMENT FOR TRANSFERRING ELECTRICAL POWER AND/OR INFORMATION SIGNALS**
VERFAHREN UND ANORDNUNG ZUR ÜBERTRAGUNG VON ELEKTRISCHEM STROM UND/ODER INFORMATIONSSIGNALEN
PROCÉDÉ ET DISPOSITIF POUR TRANSFÉRER DE L'ÉNERGIE ÉLECTRIQUE ET/OU DES SIGNAUX DE DONNÉES

(43) Date of publication of application: 24.09.2014
(73) Proprietor: SAAB AB, 581 88 Linköping (SE)
(72) Inventor: HÅDÉN, Bertil, S-583 33 Linköping (SE); FIGUEROA-KARLSTRÖM, Eduardo, S-127 61 Skärholmen (SE)
(74) Representative: Zacco Sweden AB
(86) International application number: PCT/SE2011/051393
(87) International publication number: WO 2013/074009

(56) References cited:
- WO-A1-2008/139213
- WO-A1-2008/139213
- GB-A- 209 133
- GB-A- 2 328 092
- US-A- 3 919 509
- US-A- 5 680 124
- US-A1- 2010 055 929
- US-A1- 2010 327 111

## Description

### TECHNICAL FIELD

The present invention relates to a method for transferring electrical power and/or information signals between a first structure and a second structure, said structures being mutually movable by means of a driving support element.

The present invention relates to an arrangement for transferring electrical power and/or information signals between a first structure and a second structure, said structures being mutually movable by means of a driving support element. The invention also relates to a platform carrying the arrangement.

The invention also relates to a computer programme and a computer programme product.

### BACKGROUND ART

Aircrafts are continuously exposed to varying climatic condition and among the extreme situations is ice accretion one of the most threatening events. Ice accretion is known to cause serious perturbation to the flying conditions due to ice formations in aerodynamic surfaces of aircraft.

The use of de-icing devices for aircraft with slats requires secure and reliable powering of the de-icing devices. Also, reliable control, regulation and sensor wiring of the de-icing devices has to be provided. Power and signals need to be transmitted between the wing and its associated movable slat in a spark risk free and highly reliable way.

One difficulty with providing power and signal transmission to the slat is that it characteristically is movable in relation to the wing and thus can be retracted and ejected in relation to the wing.

The slats are moved mainly during climb and approach. Cruising will normally be performed with retracted slats. The slats characteristically have a retracted normal mode and ejected positions with several degrees of extension (for example at least four including its full extension). The implication of this on wiring for a de-icing solutions results in highly demanding reliability issues. The wires could be subjected to back and forth bending and stretching while exposed to highly turbulent airflow, vibration, mechanical and climatic stresses, etc.

The process of extension and retraction of the slats in a large number of cycles will thus result in a high level of stress to the wiring. Ageing and damages to the wires could endanger flight (risks of shorts and discharges) and jeopardize a reliable functionality of de-icing devices mounted in the slats (due to failure in powering and/or in signal traffic).

WO 2008/139213 A1 describes an electrical connection device for providing electrical communication between a fixed structure of an aircraft and a movable component mechanically connected to the fixed structure. The electrical connection device is arranged to be mechanically connected to the fixed structure at a first end of the connection device and is arranged to be mechanically connected to the movable component at a second end of the connection device. The electrical connection device comprises a telescoping element.

US 2010/0327111 A1 describes a telescopic strut comprising a plurality of hollow members arranged to slide one within another between a retracted and an extended position. The telescopic strut may be used to electrically connect a moveable control surface to a fixed aerofoil structure in an aircraft.

### SUMMARY OF THE INVENTION

There is an object of the invention to provide improved method for transfer of electrical power and/or information signals between a first structure and a second structure.

This has in one example been achieved by means of a method according to claim 1, for transferring electrical power and/or information signals between a first structure and a second structure, said structures being mutually movable by means of a driving support element. The method comprises the steps of providing a transfer element arranged to transfer electrical power and/or information signals between the first structure and the second structure and controlling electrical contact by means of the transfer element so as to provide electrical contact in at least two different contact areas, said contact areas corresponding to predetermined mutual positions of said structures.

One advantage with this solution is that it does not involve sliding electrical contact. Therefore no sparks are formed as the support element is moved back and forwards.
Further, this solution allows for reliable operation of the second structure while ensuring transmission of electrical power and information signals to the second structure. The solution can, although demanding some control and regulation, be accomplished with high accuracy and reliability.
One additional advantage with the solution is that no bending and extension of a wire bundle is present, as the wires do not follow the extension - retraction process of the second structure. This results in the advantages of avoiding metallic fatigues and insulation ageing of wires

The transfer element follows the movement of the driving support element.

The transferring electrical power and/or information signals is performed at will in so far that transferring is not performed when moving said driving support element and thus the transfer element, but when said driving support element is in one of said predetermined positions.

In one option, the first structure comprises at least one contact element providing contact between at least one wire of the first structure with at least one conducting path extending along the transfer element to the second structure, wherein the contact element is arranged to be in an open state when moving said transfer element and in a closed state when the transfer element is in one predetermined position.

A transferring mode with respect to said contact areas may be entered or left by turning said transfer element around its own longitudinal axis.

Alternatively, the transferring mode with respect to said contact areas may be entered or left by turning said at least one contact element along a turning axis concentric with the transfer element into or from contact with said transfer element.

A transferring mode with respect to said contact areas may be entered or left by means of a clamping configuration for contacting said transfer element in said predetermined mutual positions.

Said transferring may correspond to electrical power for a de-icing configuration of said second structure.

Said first structure may be a fixed wing structure and said second structure may be an associated slat.

According to an aspect of the invention there is provided a de-icing system according to claim 6. The arrangement comprises transferring electrical power and/or information signals between a first structure and a second structure, said structures being mutually movable by means of a driving support element. The arrangement comprises a transfer element arranged to transfer electrical power and/or information signals between the first structure and the second structure and at least two different contact areas for providing electrical contact by means of said transfer element, said contact areas corresponding to predetermined mutual positions of said structures.

The transfer element follows the movement of the driving support element.

The arrangement is arranged to control transfer of electrical power and/or information signals so that transferring is not performed when moving said support element, but when said support element is in one of said predetermined positions.

The arrangement may be arranged to enter or leaving a transferring mode with respect to said contact areas by turning said transfer element around its own longitudinal axis.
In one option, the at least one contact element is extending inwards from a hollow contact holder concentric with the transfer element, wherein said arrangement is arranged to enter or leaving a transferring mode with respect to said contact areas by turning said hollow contact holder around its axis into or from contact with at least one protruding part of the transfer element.

The arrangement may be arranged to enter or leave a transferring mode with respect to said contact areas by means of a clamping configuration for contacting said transfer element in said predetermined mutual positions.

The first and/or second structure is provided with a de-icing configuration wherein said transferring corresponds to electrical power and/or information signals for said de-icing. The first structure may be a fixed wing structure and the second structure is an associated slat.

According to an aspect of the invention there is provided a platform comprising the arrangement. The platform may be a stationary facility. The platform may be an aircraft.

According to an aspect of the invention there is provided a computer programme according to claim 12, comprising a programme code for transferring electrical power and/or information signals between a first structure and a second structure, said structures being mutually movable by means of a driving support element, comprising the step of controlling electrical contact by means of a transfer element so as to provide electrical contact in at least two different contact areas, said contact areas corresponding to predetermined mutual positions of said structures, when said computer programme is run on a computer. According to an aspect of the invention there is provided a computer programme product according to claim 13, comprising a programme code stored on a computer readable media, for transferring electrical power and/or information signals between a first structure and a second structure, said structures being mutually movable by means of a driving support element, and controlling electrical contact by means of a transfer element so as to provide electrical contact in at least two different contact areas, said contact areas corresponding to predetermined mutual positions of said structures, when said computer programme is run on a computer.

### BRIEF DESCRIPTION OF THE DRAWINGS

For a more complete understanding of the present invention and further objects and advantages thereof, reference is now made to the examples shown in the accompanying drawings, wherein like reference characters refer to like parts throughout the several views, and in which:
Figure 1 schematically illustrates a platform in the form of an aircraft, according to one application of the present invention;
Figure 2 schematically illustrates an extension/retraction arrangement according to one example of the present invention;
Figure 3 schematically illustrates an example of a plurality of extension/retraction arrangements arranged in association to one common first structure.
Figure 4 schematically illustrates one example of a contact system for providing electrical contact.
Figure 5a schematically illustrates an example of one contact element pair of a contact system as that of Figure 4 in an open state.
Figure 5b schematically illustrates an example of one contact element pair of a contact system as that of Figure 4 in a closed state.
Figure 6a schematically illustrates a cross section of an alternative contact system for providing electrical contact.
Figure 6b schematically illustrates a cut view in a longitudinal direction of one example of the alternative contact system for providing electrical contact.
Figure 7 schematically illustrates one example of a method for transferring electrical power and/or information signals between a first structure and a second structure;
Figure 8 schematically illustrates the steps for transferring electrical power and/or information signals between a first structure and a second structure in accordance with one example;
Figure 9 schematically illustrates a control unit, according to an aspect of the present invention.
Figure 10a schematically illustrates a cross section of yet an alternative contact system for providing electrical contact.
Figure 10b schematically illustrates one example of a contact element in the yet alternative contact system for providing electrical contact.

### DETAILED DESCRIPTION

The concept described in this description can be used in numbers of technical applications where the extension of a wired module is made in steps of a total span of possible extension levels, including steps from a retracted position to total extension to the full extension of a support element supporting the wired module. This submitted technique however is not intended to be a working solution for a continuous gliding of a unit, say a slat, where the electrical contacts are continuously connected.

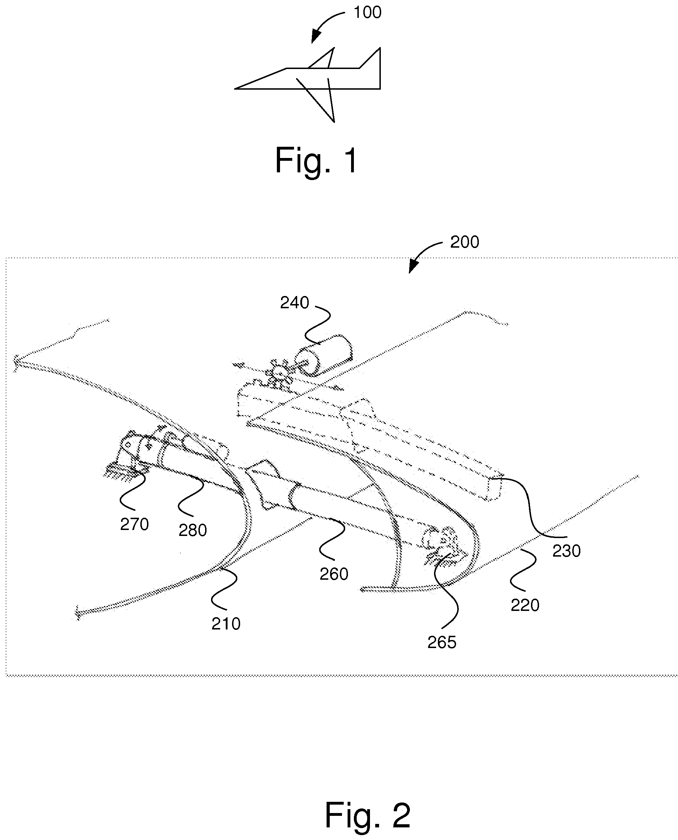

With reference to Figure 1, there is depicted a platform 100 according to an application of the invention. According to Figure 1 a the platform 100 is exemplified by an aircraft. The aircraft may be a fighter, bomber, surveillance aircraft, or a combination thereof. The aircraft may be a commercial civilian aircraft, such as an airliner, or utility aircraft. The aircraft may be engine powered or a glider. The aircraft may be manned or unmanned, e.g. an UAV (Unmanned Aerial Vehicle). The aircraft may be fixed-wing, rotary wing or a combination thereof. The platform 100 may alternatively be a satellite, space-shuttle, rocket or missile. The platform may be a truck or the like.

According to other examples where the arrangement may be implemented, the platform may be a watercraft, such as a ship, boat or ferry. The arrangement may be installed on an oil rig, or other floating platform. The arrangement may be suitable for installation on a floating wind power installation. The arrangement is for de-icing a structure moving in relation to another structure. Figure 2 schematically illustrates an extension/retraction arrangement 200 comprising a first structure 210 and a second structure 220. The second structure 220 is movable in relation to the first structure 210 by means of a driving support element 230. Thus, the driving support element 230 is supported in one end in the first structure 210 and in its opposite second end in the second structure 220. In the illustrated example, a drive motor 240 is controlled by a control unit (not shown) so as control extension/retraction of the driving support element 230 to a desired relationship between the first and second structures. The first and/or second structure may be made of a non-metallic material, such as a full-plastic material, comprising e.g. carbon-fibre and/or glass-fibre. The first and/or second structure may be made of a metallic material, such as Alumina, or light weight metallic alloys. According to one example, the first and/or second structure may be made of a metallic material and whole plastic material. The driving support element 230 may be a rigid support piece such as a beam. In one example, the first structure and the second structure are parts of a wing of an aircraft.

Electrical power and/or information signals are transferred between the first and the second structure via a transfer element 260. The transfer element 260 is supported in the first structure in one end and in the second structure in its other end. The transfer element 260 is extendable/retractable. The transfer element is arranged to follow extension/retraction of the driving support element. In an alternative example, not forming part of the claimed invention but useful for understanding it, the driving support element 230 and the transfer element 260 are integrally formed one piece. Transfer of electrical power and/or information signals over the transfer element is controlled so that transfer is not performed when moving said transfer element. Only when the transfer element is immovable in one of a plurality of predetermined positions, electrical transfer is provided between the first and second structures via the transfer element. The first and/or second structures are provided with one or a plurality of de-icing arrangements. Power for the de-icing arrangement(s), information for control of the de-icing arrangement(s) and/or measurement signals from the de-icing arrangement(s) are transferred between the both structures.

The transfer element 260 comprises in one example an elongated rod formed by an electrically insulating material provided with conducting paths for transmission of the signals between the two structures. In one example, the conducting paths have conducting surfaces along their entire extension. Alternatively the conducting paths comprise along their extension both parts with conducting surfaces and parts where the conducting material is isolated from the open air. At least one contact element is mounted in relation to the first structure so as to electrically connect wires within the first structure with the conducting paths of the support element. The at least one contact element is arranged to provide the electrical connection in a closed state and provide disconnection between the wires of the first structure and the conducting paths of the transfer element in an open state. Opening and closing of the at least one contact element is controlled by the control unit. The control unit is further arranged to control the contact element so as to be in the open state during movement of the transfer element and to bring the connection element in the closed state when driving support element and thus the transfer element has been driven to a position given by the control unit.

The conducting paths of the transfer element are connected to electrical device(s) in the second structure by means of wires.

In the illustrated example, the transfer element is guided along a part of its extension at the first structure within a guiding element 280 arranged to provide guidance to a movement of the transfer element so as to displace the second element in relation to the first element. In the illustrated example, the guiding element is concentric with the transfer element. The guiding element may at one end be articulated in a support point 270 within the first structure 210. The transfer element may be articulated in a support point 265 in the second structure. In one example, the support structure is articulated in the second structure at its end. Further, the guiding element may be articulated in the second structure at its distal end. The articulated support of the guiding element in the first structure, the articulated support of the transfer element in the second structure and the guiding provided by the guiding element provides for smooth follow-up of the movement of the second structure while being extended and/or retracted.

In detail, the illustrated part of the first structure may be the front part of a wing and the second part may be a slat. The slat may comprise de-icing arrangements, which demands both power transfer to the slat and signal transmission both to and from the slat. The contact elements may each comprise an actuator and a contact switched between the two states by the actuator. The transfer element may be formed as a beam. The guiding element may be formed as a hollow cylinder.

The parts of the transfer element not enclosed by the guiding element may in one example be arranged within a casing (not shown). In one example, the casing comprises cylindrical canisters wherein one goes inside the other in a telescopic fashion as the transfer element is extended/retracted. The casing may then be provided with pressure regulation so as to avoid formation of a pressurized chamber within the casing. Air outlet is in one example provided at one end facing the second structure to avoid sucking in fuel fumes which could be formed in the front part of the wing.

As is clear from the above, the transfer element can slide within the guiding element of the first structure so as to position the transfer element in desired positions for providing a desired retraction/extension level of the second structure. The transfer element is electrically connectable to the first structure in a predetermined number of connection areas. Electrical wires of the first structure are electrically connectable to the conducting paths of the transfer element by means of the contact elements. At least two different contact areas are provided on the transfer element for providing electrical contact between the two structures. As is clear from the above, each contact area corresponds to predetermined mutual positions of said structures. Each contact area may comprise one or a plurality of contact elements.

In one example, the contact areas are evenly distributed along the lengthwise extension of the transfer element. In one example there are 2-8 contact areas along the lengthwise extension of the transfer element. The transfer element may comprise five evenly distributed contact areas along its extension so that the second structure may be totally retracted, ejected 25%, ejected 50%, ejected 75% and 100% ejected.

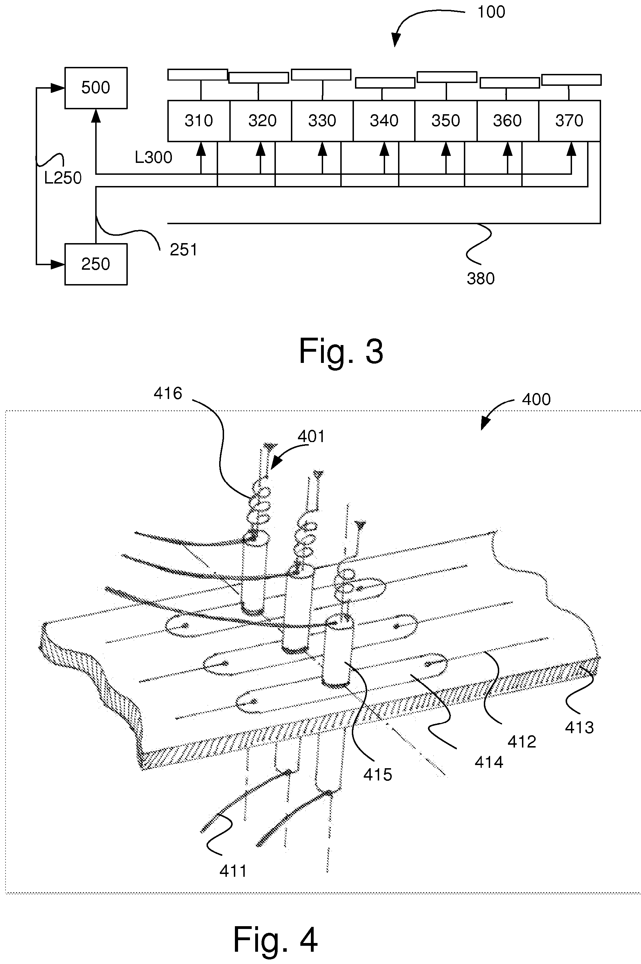

In fig 3, a plurality of second structures are associated to a first structure so that the second structures are movable in relation to the first structure by means of a respective support element. In one example, the first structure is the wing 380 of an aircraft 100. The wing 380 is provided with a plurality of slats. For example, seven slats are provided, a first slat 310, a second slat 320, a third slat 330, a fourth slat 340, a fifth slat 350, a sixth slat 360 and a seventh slat 370.

In one example, at least one de-icing arrangement is provided for at least one of the slats 310-370. The voltage power source 250 is arranged to be controlled by the control unit 500. According to this example, the voltage power source 250 is arranged to power said at least one de-icing arrangement provided in each of said seven slats 310-370. The communication signals and power transmission to each slat may be mutually independent. Alternatively, the communication signals and power transmission to at least some of the slats are dependent.

In Fig 4, one example of a contact system 400 for providing electrical contact between the wires 411 of the first structure and conducting paths 412 of the transfer elements 413 is illustrated according to a clamping configuration. As is described above, the transfer element 413 comprises one or a plurality of conducting paths 412 extending along the extension of the transfer element. Contact areas 414 are provided at predetermined positions along the extension of the conducting paths for providing said electrical contacts to the wires of the first structure. In each contact area each contact element 401 is arranged to provide contact betwween a contact part 415 and an associated conducting path of the transfer element. At these contact areas 414, the conducting paths may have an expanded contact surface for providing electrical contact to the associated contact element of the first structure. The expanded contact surfaces may be entirely provided by an electrically conducting material. Instead of providing a continuous contact surface, each conducting path may be expanded to a plurality of conducting paths within the contact area. In yet another example, the conducting paths have the same dimension along the extension of the transfer element.

When the transfer element is placed in a desired position in relation to the contact, the contact is closed so as to provide the electrical contact. The expanded contact areas as described above secure electrical connection without making the requirement on accuracy in the positioning of the transfer element in relation to the contact element a concern. However, as is evident from the above, contact can also be provided without expanding the contact surfaces in the contact areas.

In the illustrated example, redundancy is provided by having double conducting paths and contact areas on opposite sides of the transfer element. On one example, the conducting paths on the opposite sides of the transmission element are arranged to provide redundancy. In one example, conducting path(s) of the transfer element extend through the transfer element so that the redundancy is provided not by a plurality of conducting paths but by one conducting go-through transmission layer having its edges in open air. In an alternative, the conducting paths on the opposite sides are arranged to transfer different information.

In one example, the contacts are electromagnetically opened and closed. The contacts may be spring loaded. When having redundant contact elements, the electrical connection between the contact elements and the associated conducting path(s) will less sensitive to disturbances such as oscillations.

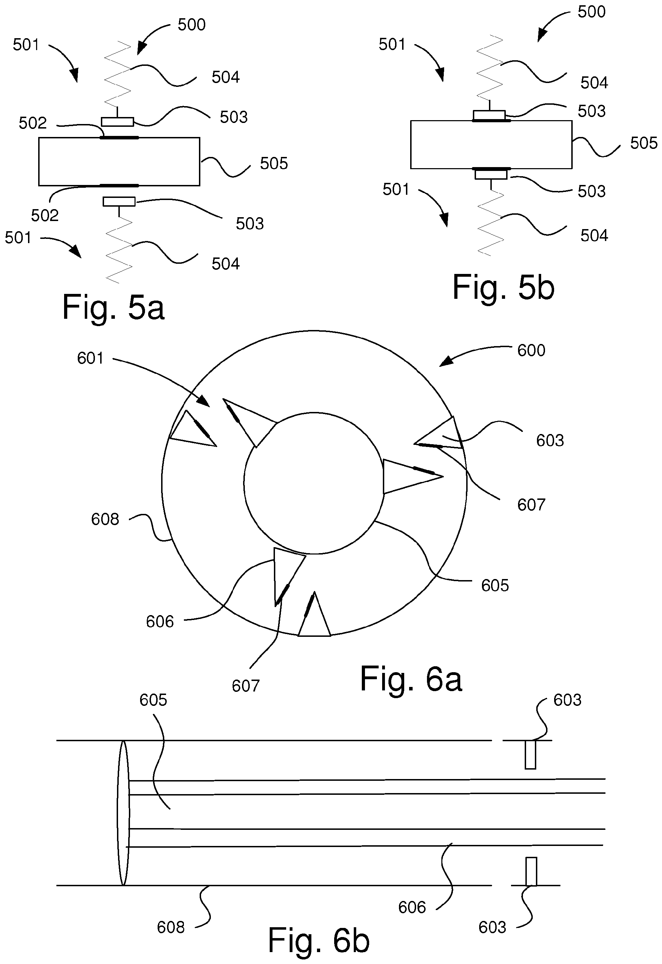

Figures 5a and 5b illustrate an example of a contact system 500 comprising one configuration of two contact elements 501 in an open state and a closed state, respectively. In the illustrated example, the contact elements are arranged pair wise and in an opposed direction. Each contact element 501 comprises a contact surface 502 on the transmission element 505 and a corresponding contact part 503. The opposed closing direction of the contact elements has been selected to counteract effect of oscillations in arbitrary directions. With the suggested design it is achieved that while forces caused by the oscillations act on one of the contact elements in an closing direction, the same forces acts on the other contact element in an opening direction. Thereby, deleterious effect on the electrical contacts surfaces 502 due to continuous oscillation can be counteracted. The fretting action of oscillations is reduced. Further, redundancy is built in the technical solution. This is further improved with pressure and the action of springs 504 that contribute to keep contacts closed in all events of perturbing forces due to oscillations. With the suggested design, presence of micro-sparks is reduced as far as possible while contacts are powered. The sparks, which can otherwise occur due to micro-separations induced by mechanical vibration can erode contact surfaces. This may have an undesirable effect, for example it can cause ignition of fuel fumens. The closing mechanism force acting on the contact element so as to open and close the contacts and the bias force from the springs in combination is selected according to dimensioning criteria for electrical contacts with respect to plastic deformation of contact materials selected for the application.

In the figures 6a, 6b, one example of a contact system 600 for providing electrical contact between the wires of the first structure and conducting paths of a transfer element 605 is illustrated according to a turning or rotational configuration. The contact system comprises three contact elements 601. The transfer element 605 is provided with at least one protruding part 606. In the illustrated example, three protruding parts 606 each extend radially from the transfer element 605. The protruding part 606 extends in the illustrated example along the entire length of the transfer element. Alternatively, the transfer element is only provided with the protruding parts 606 in a discrete number of contact areas. As is described above, the transfer element 605 comprises one or a plurality of conducting paths extending along the extension of the transfer element. Contact areas for the conducting paths are provided at the protruding parts at predetermined positions along the extension of the conducting paths for providing said electrical contacts to the wires of the first structure. In each contact area a contact part 603 is arranged to provide contact with one associated conducting path at the protruding part of the transfer element. At these contact areas, the conducting paths may have an expanded contact surface for providing electrical contact to the associated contact element of the first structure. As been mentioned above, the expanded contact surfaces may be entirely or partly provided by an electrically conducting material. In yet another example, the conducting paths have the same dimension along the extension of the transfer element.

The transfer element runs within at least one contact holder 608. The at least one contact holder 608 is in one example arranged concentrically with the transfer element 605. At least one contact part 603 such as a fin 603 having at least one contact surface 607 extends radially inwards from the contact holder 608. The contact holder is rotatable between an open state, wherein the contact part(s) 603 is not arranged to be in contact with its corresponding conducting path and a closed state wherein contact is arranged to be provided between the conducting path and the contact element. Accordingly, the at least one fin is arranged in the contact holder in relation to the protruding parts 606 of the transfer element such that when the contacts are in an open state, the transfer element can be moved back and forwards without interfering with the fins. As is clear from above, the contact holder is rotatably arranged in relation to the transfer element. Thus, either the contact holder 608 or the transfer element 605 may be fixedly arranged while the other part is rotatably arranged. When the transfer element is placed in a desired position, the contact is closed so as to provide the electrical contact. The contact is closed and opened by means of a drive motor arranged to rotate either the contact holder or the transmission element into and from the closed state. In the closed state the fins 603 of the contact holder 608 and the protruding parts of the transfer element are rotated in relation to the fins so that each contact element part of the fin contact the conducting path of a corresponding protruding part of the transfer element.

In one example the contact holder 608 is arranged in close relation to the guiding element. In yet another example, the contact holder is formed integrally with the guiding element. In accordance with this example, the entire guiding element may be rotated into and from contact with the conducting paths of the transfer element.
The closing mechanism force and the bias force in combination are selected according to dimensioning criteria for electrical contacts with respect to plastic deformation of contact materials selected for the application.

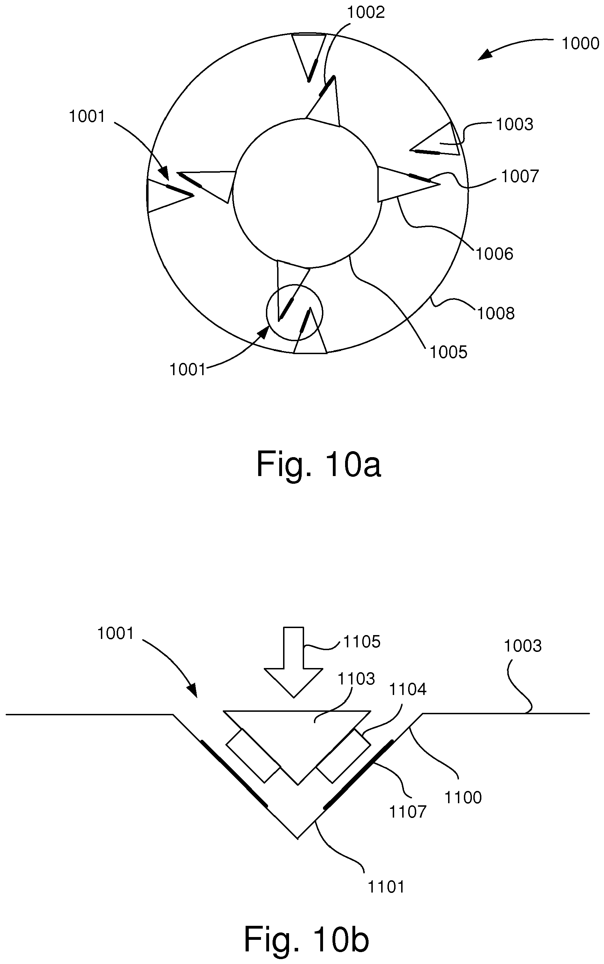

With reference to Figure 10a, a contact system 1000 is illustrated according comprises four contact elements 1001 for providing electrical contact between the wires of the first structure and conducting paths of the transfer element is illustrated according to one design of a turning or rotational configuration more generally described in relation to Figures 6a and 6b. A transmission element 1005 is provided with protruding parts 1006 as described above and a contact holder 1008 is provided with corresponding fins 1003 as described above. Contact surfaces 1002 of the conducting paths are as described above provided on the protruding parts 1006 of the transfer element 1005. The contact surfaces 1002 are arranged to be in contact with a corresponding contact part 1007 on a fin 1003 of the contact holder as described above. In the illustrated example, the transmission element and contact holder are provided with corresponding parts for an even number of contact elements. Redundancy may then be provided by dividing the conducting paths pair wise, wherein each pair is arranged to transmit the same information. In one example, oppositely arranged conducting paths are arranged to form a pair of contact elements. In one example, with four conducting paths of the transfer element, one conducting path pair may be arranged to transmit information signals and one conducting path pair may be arranged for power transfer.

In Fig 10b a contact system 1000 comprises four contact elements 1001 wherein at least contact element(s) arranged for power transmission is designed in 'V' shaped configuration. In this configuration each fin 1003 may be provided with a V shaped recess 1100. The walls 1101 of the recess are provided with contact surfaces 1107. Further, the protruding parts of the transfer element may each be formed with protrusions 1103 fitting into the corresponding recesses 1100 of the contact holder. The walls of the protrusions 1103 are provided with contact surfaces 1104 arranged for contact to the contact surfaces 1107 of the contact holder when the contact elements 1001 are in the closed state. In one example also conducting paths arranged for signals and data traffic may be provided with contact elements 1001 according to this design. With this design, fretting action of oscillations in arbitrary directions can be further reduced.

With the design of Fig 10b, the closing mechanism force 1105 can be increased with respect to dimensioning criteria with respect to plastic deformation of contact materials selected for the application.

Of course the design of the contact element described in relation to Figure 10b can also be applied to the other examples herein described.

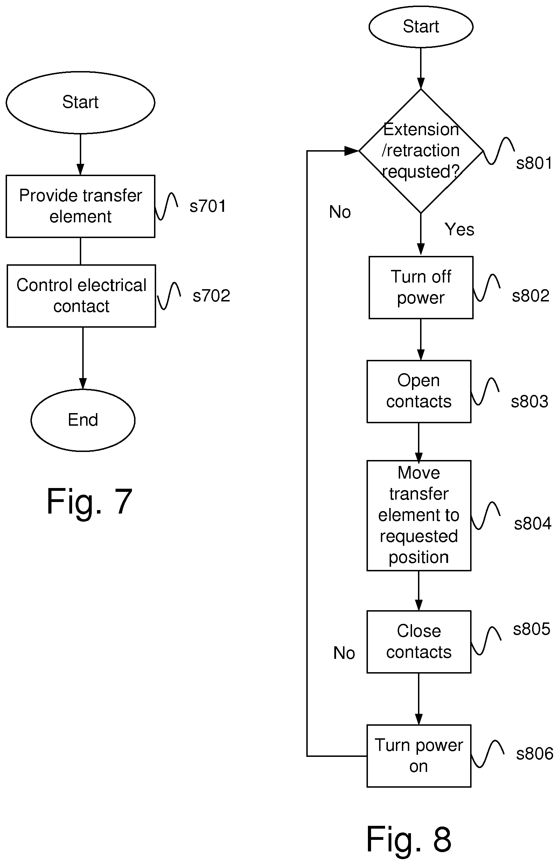

With reference to Figure 7, there is illustrated a method for transferring electrical power and/or information signals between a first structure and a second structure, said structures being mutually movable by means of a driving support element. The method comprises the steps of providing s701 a transfer element arranged to transfer electrical power and/or information signals between the first structure and the second structure, and controlling s702 electrical contact by means of the transfer element so as to provide electrical contact in at least two different contact areas , said contact areas corresponding to predetermined mutual positions of said structures.

With reference to Fig 8, there is illustrated a method for transferring electrical power and/or information signals between a first structure and a second structure via a transmission element, wherein at least two different contact areas for providing electrical contact are provided said contact areas corresponding to predetermined mutual positions of said structures. In a first step s801, it is determined whether an extension/retraction of the second structure by means of the driving support element is requested. If requested, power for electrical equipment of the second structure is turned off in a next step s802. Thereafter the electrical contact between the first structure and the support transfer element opened in step s803. Thereafter, the driving support element and the transfer element are moved to a requested extension/retraction position in step s804. When the driving support element and transfer element is in the requested position, the electrical contact is closed in step s805. Thereafter, power is turned on in step s806.

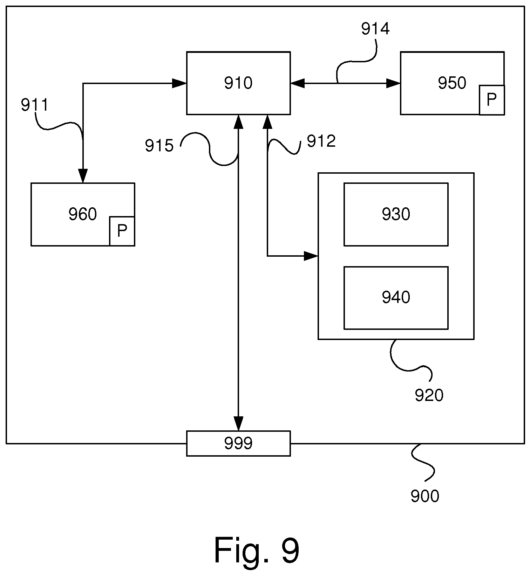

In accordance with this method, the contacts are opened and/or closed in a potential free condition. Thus, there exists no risk of spark formations when switching on and off power and signal transmission to the second structure. This demands that the control unit works in a solid-state switching mode connecting electricity to the contacts in a delayed (while closing) or advanced (while opening) mode upon the initiation or termination of movement of the extension mechanism for the second structure
The opening/closing of electrical contacts for power transfer are very demanding. For example the power transferred may be ±270 V DC. The risk of flash over at closing or opening of powered contacts is evident and grows as the pressure is lowered while aircraft climbs (Paschen effect). This risk has been eliminated by opening/closing power transfer in a potential free condition. The solid state switching operation controlled by the control unit completes the technique used to take care of a total risk free switching in places with high level of risk for explosions or fire (for example due to fuel fumes in the wings of aircraft and alike).
With reference to Figure 9, a diagram of one embodiment of the electronic data processing unit 900 is shown. The electronic data processing unit 900 is also referred to as a control unit 900. The control unit 900 may be a de-icing control unit aboard an aircraft 100. The control unit 900 may be a de-icing control unit of a wind power installation 110.

The control unit 900 comprises a non-volatile memory 920, a data processing device 910 and a read/write memory 950. Non-volatile memory 920 has a first memory portion 930 wherein a computer program, such as an operating system, is stored for controlling the function of the control unit. Further, the control unit 900 comprises a bus controller, a serial communication port, I/O-means, an A/D-converter, a time date entry and transmission unit, an event counter and an interrupt controller (not shown). Non-volatile memory 920 also has a second memory portion 940.
The control unit 900 may be arranged for communication with a flight computer of an aircraft or a central monitoring system computer. A computer program P comprising routines for controlling the powering and/or signaling to and from a second structure by means of a driving support element and controlling movement of the driving support element, may be stored in an executable manner or in a compressed state in a separate memory 960 and/or in a non-volatile memory 950 or the like. The memory 960 is a non-volatile memory, such as a flash memory, an EPROM, an EEPROM or a ROM. The memory 960 may be a computer program product. The memory 950 may be a computer program product.

When it is stated that the data processing device 910 performs a certain function it should be understood that the data processing device 910 performs a certain part of the program which is stored in the separate memory 960, or a certain part of the program which is stored in the read/write memory 950.

The data processing device 910 may communicate with a data communications port 999 by means of a data bus 915. The non-volatile memory 920 is adapted for communication with the data processing device 910 via a data bus 912. The separate memory 960 is adapted for communication with the data processing device 910 via a data bus 911. The non-volatile memory 950 is adapted for communication with the data processing device 910 via a data bus 914.

Signals may received related to control of the extension/retraction of the second structure and/or related to control equipment in the second structure and be stored in the memory 950 or 960.

When data is received on the data port 999 from the electrical equipment of the second structure, it is temporarily stored in the second memory portion 940. When the received input data has been temporarily stored, the data processing device 910 is set up to perform execution of code in a manner described herein.

Parts of the methods described herein can be performed by the apparatus by means of the data processing device 910 running the program stored in the separate memory 960 or the non-volatile memory 950. When the apparatus runs the program, parts of the methods described herein are executed.

An aspect of the invention relates to a computer programme (P) comprising a programme code for transferring electrical power and/or information signals between a first structure and a second structure, said structures being mutually movable by means of a driving support element, comprising the step of:
- controlling electrical contact by means of a transfer element so as to provide electrical contact in at least two different contact areas, said contact areas corresponding to predetermined mutual positions of said structures, when said computer programme is run on a computer (900).

An aspect of the invention relates to a computer programme product comprising a programme code stored on a, by a computer readable, media for transferring electrical power and/or information signals between a first structure and a second structure, said structures being mutually movable by means of a driving support element, and controlling electrical contact by means of a transfer element so as to provide electrical contact in at least two different contact areas, said contact areas corresponding to predetermined mutual positions of said structures, when said computer programme is run on a computer 900.

The computer programme (P) may be arranged to comprising a programme code for performing the method as described in relation to Figure 8.

The foregoing description of the preferred embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated.

## Claims

1. Method for transferring electrical power and/or information signals between a first structure (210) and a second structure (220), said second structure (220) being movable in relation to the first structure (210) by means of a driving support element (230) and said first and/or second structure (210; 220) being provided with one or a plurality of de-icing arrangement(s), the method comprising the step of:
- providing (s701) a transfer element (260) arranged to transfer electrical power and/or information signals and/or measurement signals between the first structure (210) and the second structure (220), wherein said transfer element (260) is arranged for transferring electrical power for the de-icing arrangement(s), information for control of the de-icing arrangement(s) and/or measurement signals from the de-icing arrangement(s), wherein said transfer element (260) is supported in the first structure (210) at one end and in the second structure (220) at its other end, wherein the transfer element (260) is extendable and retractable and is arranged to follow the movement of the driving support element (230), whereby a certain extension/retraction position of the transfer element (260) corresponds to a certain position of the second structure (220) in relation to the first structure (210),
**characterised by** the step of:
- controlling (s702) electrical contact between the two structures (210; 220) by means of the transfer element (260) so as to provide electrical contact in at least two different contact areas (414; 502; 607) on the transfer element (260), each contact area (414; 502; 607) corresponding to a different predetermined extension/retraction position of said transfer element (260), wherein said transferring of electrical power and/or information signals is performed intermittently in so far that transferring is not performed when moving said transfer element (260), but only when said transfer element (260) is in one of said predetermined extension/retraction positions.

2. Method according to claim 1, wherein the first structure (210) comprises at least one contact element (401; 501; 601) providing contact at the contact areas (414; 502; 607) between at least one wire (411) of the first structure (210) with at least one conducting path (412) extending along the transfer element (260, 413) to the second structure (220), wherein the contact element (401; 501; 601) is arranged to be in an open position when moving said transfer element (260, 413) and in a closed position when the transfer element (260, 413) is in one predetermined extension/retraction position.

3. Method according to one of the claims 1-2, wherein a transferring mode with respect to said contact areas (607) is entered or left by turning said transfer element (605) around its own longitudinal axis.

4. Method according to claim 2, wherein a transferring mode with respect to said contact areas (607) is entered or left by turning said at least one contact element along a turning axis concentric with the transfer element (605) into or from contact with said transfer element (605).

5. Method according to claim 2, wherein a transferring mode with respect to said contact areas (414; 502) is entered or left by means of a clamping configuration for contacting said first structure (210) with said transfer element (413; 505) in said predetermined extension/retraction positions.

6. A de-icing system comprising:
- a first structure (210) and a second structure (220), said second structure (220) being movable in relation to the first structure (210) by means of a driving support element (230) and said first and/or second structure (210; 220) being provided with one or a plurality of de-icing arrangement(s), and
- a transfer element (260) arranged to transfer electrical power and/or information signals and/or measurement signals between the first structure and the second structure, wherein said transfer element (260) is arranged for transferring electrical power for the de-icing arrangement(s), information for control of the de-icing arrangement(s) and/or measurement signals from the de-icing arrangement(s), wherein said transfer element (260) is supported in the first structure (210) at one end and in the second structure (220) at its other end, wherein the transfer element (260) is extendable and retractable and is arranged to follow the movement of the driving support element (230), whereby a certain extension/retraction position of the transfer element (260) corresponds to a certain position of the second structure (220) in relation to the first structure (210),
**characterised in that** the system further comprises:
- at least two different contact areas (414; 502; 607) on the transfer element (260) for providing electrical contact between the two structures (210; 220) by means of said transfer element (260), each contact area (414; 502; 607) corresponding to a different predetermined extension/retraction position of said transfer element (260), wherein said system is arranged to control transfer of electrical power and/or information signals, so that transferring is not performed when moving said transfer element (260), but only when said transfer element (260) is in one of said predetermined extension/retraction positions.

7. System according to claim 6, wherein the first structure (210) comprises at least one contact element (401; 501; 601) arranged to provide contact at the contact areas (414; 502; 607) between at least one wire (411) of the first structure (210) with at least one conducting path (412) extending along the transfer element (260, 413) to the second structure (220), wherein the contact element (401; 501; 601) is arranged to be in an open position when moving said transfer element (260, 413) and in a closed position when the transfer element (260, 413) is in one of the predetermined extension/retraction positions.

8. System according to claim 7, wherein the at least one contact element (601) is extending inwards from a hollow contact holder (608) concentric with the transfer element (260, 605) and wherein said system is arranged to enter or leave a transferring mode with respect to said contact areas (607) by turning said hollow contact holder (608) around its axis into or from contact with at least one protruding part (606) of the transfer element (260, 605).

9. System according to any of claims 6-7, wherein said system is arranged to enter or leave a transferring mode with respect to said contact areas (414; 502) by means of a clamping configuration for contacting said first structure (210) with said transfer element (260) in said predetermined extension/retraction positions.

10. Platform (100; 110) comprising the system according to any of claims 6-9.

11. Platform according claim 10, wherein said platform is a stationary facility.

12. Computer programme (P) comprising a programme code for transferring electrical power and/or information signals and/or measurement signals between a first structure (210) and a second structure (220), said second structure (220) being movable in relation to the first structure (210) by means of a driving support element (230), said first and/or second structures (210; 220) being provided with one or a plurality of de-icing arrangements, wherein a transfer element (260) is arranged for transferring electrical power for the de-icing arrangement(s), information for control of the de-icing arrangement(s) and/or measurement signals from the de-icing arrangement(s), wherein said transfer element (260) is supported in the first structure (210) at one end and in the second structure (220) at its other end, wherein the transfer element (260) is extendable and retractable and is arranged to follow the movement of the driving support element (230), whereby a certain extension/retraction position of the transfer element (260) corresponds to a certain position of the second structure (220) in relation to the first structure (210), comprising the step of:
- controlling electrical contact to the de-icing arrangement(s) between the two structures (210; 220) by means of the transfer element (260) so as to provide electrical contact in at least two different contact areas (414; 502; 607) on the transfer element (260), each contact area (414; 502; 607) corresponding to a different predetermined extension/retraction position of said transfer element (260), wherein said transferring of electrical power and/or information signals to the de-icing arrangement(s) is performed intermittently in so far that transferring is not performed when moving said transfer element (260), but only when said transfer element (260) is in one of said predetermined extension/retraction positions, when said computer programme is run on a computer (900).

13. Computer programme product comprising a programme code stored on a, by a computer readable, media for transferring electrical power and/or information signals and/or measurement signals between a first structure (210) and a second structure (220), said second structure (220) being movable in relation to the first structure (210) by means of a driving support element (230), said first and/or second structures (210; 220) being provided with one or a plurality of de-icing arrangements, wherein a transfer element (260) is arranged for transferring electrical power for the de-icing arrangement(s), information for control of the de-icing arrangement(s) and/or measurement signals from the de-icing arrangement(s), wherein said transfer element (260) supported in the first structure at one end and in the second structure at its other end, wherein the transfer element (260) is extendable and retractable and is arranged to follow the movement of the driving support element (230), whereby a certain extension/retraction position of the transfer element (260) corresponds to a certain position of the second structure (220) in relation to the first structure (210), said computer programme product configured to control electrical contact to the de-icing arrangement(s) between the two structures by means of a transfer element (260) so as to provide electrical contact in at least two different contact areas (414; 502; 607) on the transfer element (260), each contact area (414; 502; 607) corresponding to a different predetermined extension/retraction position of said transfer element (260), wherein said transferring of electrical power and/or information signals to the de-icing arrangement(s) is performed intermittently in so far that transferring is not performed when moving said transfer element (260), but only when said transfer element (260) is in one of said predetermined extension/retraction positions, when said computer programme is run on a computer (900).

## Patentansprüche

1. Verfahren zur Übertragung elektrischer Leistung und/oder von Informationssignalen zwischen einer ersten Struktur (210) und einer zweiten Struktur (220), wobei die zweite Struktur (220) relativ zu der ersten Struktur (210) mittels eines Antriebshalteelements (230) bewegbar ist und die erste und/oder die zweite Struktur (210; 220) mit einer oder mehreren Enteisungsanordnungen versehen sind,
wobei das Verfahren den Schritt umfasst:
- Bereitstellen (s701) eines Übertragungselements (260), das ausgebildet ist, elektrische Leistung und/oder Informationssignale und/oder Messsignale zwischen der ersten Struktur (210) und der zweiten Struktur (220) zu übertragen, wobei das Übertragungselement (260) ausgebildet ist, elektrische Leistung für die eine oder die mehreren Enteisungsordnungen, Information zur Steuerung der einen oder der mehreren Enteisungsanordnungen und/oder Messsignale aus der einen oder den mehreren Enteisungsanordnungen zu übertragen, wobei das Übertragungselement (260) in der ersten Struktur (210) an einem Ende und in der zweiten Struktur (220) an seinem anderen Ende gehalten wird, wobei das Übertragungselement (260) ausfahrbar und einfahrbar und ausgebildet ist, der Bewegung des Antriebshalteelements (230) zu folgen, wodurch eine gewisse Ausfahr/Einfahrposition des Übertragungselements (260) einer gewissen Position der zweiten Struktur (220) relativ zu der ersten Struktur (210) entspricht, **gekennzeichnet durch** den Schritt:
- Steuern (s702) eines elektrischen Kontakts zwischen den zwei Strukturen (210; 220) mittels des Übertragungselements (260) derart, dass elektrischer Kontakt in mindestens zwei unterschiedlichen Kontaktbereichen (414; 502; 607) auf dem Übertragungselement (260) hergestellt wird, wobei jeder Kontaktbereich (414; 502; 607) einer anderen vorbestimmten Ausfahr/Einfahrposition des Übertragungselements (260) entspricht, wobei das Übertragen von elektrischer Leistung und/oder Informationssignalen so intermittierend ausgeführt wird, dass eine Übertragung nicht ausgeführt wird, wenn das Übertragungselement (260) in Bewegung ist, sondern nur dann ausgeführt wird, wenn das Übertragungselement (260) an einer der vorbestimmten Ausfahr/Einfahrpositionen ist.

2. Verfahren nach Anspruch 1, wobei die erste Struktur (210) mindestens ein Kontaktelement (401; 501; 601) aufweist, das an den Kontaktbereichen (414; 502; 607) einen Kontakt zwischen mindestens einer Leitung (411) der ersten Struktur (210) und mindestens einem Leitungsweg (412) herstellt, der sich entlang des Übertragungselements (260, 413) zu der zweiten Struktur (220) erstreckt, wobei das Kontaktelement (401; 501; 601) so angeordnet ist, dass es in einer offenen Stellung ist, wenn das Übertragungselement (260, 413) in Bewegung ist, und in einer geschlossenen Stellung ist, wenn das Übertragungselement (260, 413) an einer vorbestimmten Ausfahr/Einfahrposition ist.

3. Verfahren nach einem der Ansprüche 1-2, wobei in einen Übertragungsmodus in Bezug auf die Kontaktbereiche (607) eingetreten oder dieser verlassen wird, indem das Übertragungselement (605) um seine Längsache gedreht wird.

4. Verfahren nach Anspruch 2, wobei in einen Übertragungsmodus in Bezug auf die Kontaktbereiche (607) eingetreten oder dieser verlassen wird, indem das mindestens eine Kontaktelement entlang einer Drehachse, die konzentrisch zu dem Übertragungselement (605) ist, in Kontakt oder aus dem Kontakt mit dem Übertragungselement (605) herausgedreht wird.

5. Verfahren nach Anspruch 2, wobei mittels einer Klemmanordnung zum Kontaktieren der ersten Struktur (210) mit dem Übertragungselement (413; 505) in den vorbestimmten Ausfahr/Einfahrpositionen in einen Übertragungselement in Bezug auf die Kontaktbereiche (414; 502) eingetreten oder dieser verlassen wird.

6. Enteisungssystem mit:
- einer ersten Struktur (210) und einer zweiten Struktur (220), wobei die zweite Struktur (220) relativ zu der ersten Struktur (210) mittels eines Antriebshalteelements (230) bewegbar ist und die erste und/oder die zweite Struktur (210; 220) mit einer oder mehreren Enteisungsanordnungen versehen sind und
- einem Übertragungselement (260), das ausgebildet ist, elektrische Leistung und/oder Informationssignale und/oder Messsignale zwischen der ersten Struktur und der zweiten Struktur zu übertragen, wobei das Übertragungselement (260) ausgebildet ist, elektrische Leistung für die eine oder die mehreren Enteisungsanordnungen, Information zur Steuerung des einen oder der mehreren Enteisungsanordnungen und/oder Messsignale aus dem einen oder den mehreren Enteisungsanordnungen zu übertragen, wobei das Übertragungselement (260) in der ersten Struktur (210) an einem Ende und in der zweiten Struktur (220) an seinem anderen Ende gehalten wird, wobei das Übertragungselement (260) ausfahrbar und einfahrbar und ausgebildet ist, der Bewegung des Antriebshalteelements (230) zu folgen, wodurch eine gewisse Ausfahr/Einfahrposition des Übertragungselements (260) einer gewissen Position der zweiten Struktur (220) relativ zu der ersten Struktur (210) entspricht,
**dadurch gekennzeichnet, dass** das System ferner umfasst:
- mindestens zwei unterschiedliche Kontaktbereiche (414; 502; 607) auf dem Übertragungselement (260) zur Herstellung eines elektrischen Kontakts zwischen den zwei Strukturen (210; 220) mittels des Übertragungselements (260), wobei jeder Kontaktbereich (414; 502; 607) einer anderen vorbestimmten Ausfahr/Einfahrposition des Übertragungselements (260) entspricht, wobei das System ausgebildet ist, eine Übertragung von elektrischer Leistung und/oder von Informationssignalen derart zu steuern, dass eine Übertragung nicht ausgeführt wird, wenn das Übertragungselement (260) in Bewegung ist, sondern nur ausgeführt wird, wenn das Übertragungselement (260) an einer der vorbestimmten Ausfahr/Einfahrpositionen ist.

7. System nach Anspruch 6, wobei die erste Struktur (210) mindestens ein Kontaktelement (401; 501; 601) aufweist, das ausgebildet ist, an den Kontaktbereichen (414; 502; 607) einen Kontakt zwischen mindestens einer Leitung (411) der ersten Struktur (210) mit mindestens einem Leitungsweg (412) herzustellen, der sich entlang des Übertragungselements (260, 413) zu der zweiten Struktur (220) erstreckt, wobei das Kontaktelement (401; 501; 601) ausgebildet ist, in einer offenen Stellung zu sein, wenn das Übertragungselement (260, 413) in Bewegung ist, und in einer geschlossenen Stellung zu sein, wenn das Übertragungselement (260, 413) in einer der vorbestimmten Ausfahr/Einfahrpositionen ist.

8. System nach Anspruch 7, wobei das mindestens eine Kontaktelement (601) sich von einem hohlen Kontakthalter (608), der konzentrisch zu dem Übertragungselement (260, 605) ist, nach innen erstreckt und wobei das System ausgebildet ist, in einen Übertragungsmodus in Bezug auf die Kontaktbereiche (607) einzutreten oder diesen zu verlassen, indem der hohle Kontakthalter (608) um seine Achse gedreht wird, so dass er mit mindestens einem hervorstehenden Teil (606) des Übertragungselements (260, 605) in Kontakt tritt oder sich davon löst.

9. System nach einem der Ansprüche 6-7, wobei das System ausgebildet ist, in einen Übertragungsmodus in Bezug auf die Kontaktbereiche (414; 502) einzutreten oder diesen zu verlassen mittels einer Klemmkonfiguration zur Herstellung eines Kontakts zwischen der ersten Struktur (210) und dem Übertragungselement (260) in vorbestimmten Ausfahr/Einfahrpositionen.

10. Plattform (100; 110), das das System nach einem der Ansprüche 6-9 aufweist.

11. Plattform nach Anspruch 10, wobei die Plattform eine stationäre Anlage ist.

12. Computerprogramm (P) mit einem Programmcode zur Übertragung elektrischer Leistung und/oder von Informationssignalen und/oder von Messsignalen zwischen einer ersten Struktur (210) und einer zweiten Struktur (220), wobei die zweite Struktur (220) relativ zu der ersten Struktur (210) mittels eines Antriebshalteelements (230) bewegbar ist, wobei die erste und/oder die zweite Struktur (210; 220) mit einer oder mehreren Enteisungsanordnungen versehen sind, wobei ein Übertragungselement (260) zur Übertragung elektrischer Leistung für die eine oder die mehreren Enteisungsanordnungen, von Information zur Steuerung der einen oder der mehreren Enteisungsanordnungen und/oder von Messsignalen aus der einen oder den mehreren Enteisungsanordnungen ausgebildet ist, wobei das Übertragungselement (260) in der ersten Struktur (210) an einem Ende und in der zweiten Struktur (220) an seinem anderen Ende gehalten wird, wobei das Übertragungselement (260) ausfahrbar und einfahrbar und ausgebildet ist, der Bewegung des Antriebshalteelements (230) zu folgen, wodurch eine gewisse Ausfahr/Einfahrposition des Übertragungselements (260) einer gewissen Position der zweiten Struktur (220) relativ zu der ersten Struktur (210) entspricht, mit den Schritten:
- Steuern eines elektrischen Kontakts zu der einen oder den mehreren Enteisungsanordnungen zwischen den zwei Strukturen (210; 220) mittels des Übertragungselements (260) derart, dass ein elektrischer Kontakt in mindestens zwei unterschiedlichen Kontaktbereichen (414; 502; 607) auf dem Übertragungselement (260) hergestellt wird, wobei jeder Kontaktbereich (414; 502; 607) einer anderen vorbestimmten Ausfahr/Einfahrposition des Übertragungselements (260) entspricht, wobei die Übertragung elektrischer Leistung und/oder von Informationssignalen zu der einen oder den mehreren Enteisungsanordnungen intermittierend so ausgeführt wird, dass eine Übertragung nicht ausgeführt wird, wenn das Übertragungselement (260) in Bewegung ist, sondern nur dann ausgeführt wird, wenn das Übertragungselement (260) in einer der vorbestimmten Ausfahr/Einfahrpositionen ist, wenn das Computerprogramm in einem Computer (900) ausgeführt wird.

13. Computerprogrammprodukt mit einem Programmcode, der auf einem computerlesbaren Medium gespeichert ist, zur Übertragung elektrischer Leistung und/oder von Informationssignalen und/oder Messsignalen zwischen einer ersten Struktur (210) und einer zweiten Struktur (220), wobei die zweite Struktur (220) relativ zu der ersten Struktur (210) mittels eines Antriebshalteelements (230) bewegbar ist, wobei die erste und/oder die zweite Struktur (210; 220) mit einer oder mehreren Enteisungsanordnungen versehen sind, wobei ein Übertragungselement (260) zur Übertragung elektrischer Leistung für die eine oder die mehreren Enteisungsanordnungen, von Information zur Steuerung der einen oder der mehreren Enteisungsanordnungen und/oder von Messsignalen aus der einen oder den mehreren Enteisungsanordnungen ausgebildet ist, wobei das Übertragungselement (260) in der ersten Struktur an einem Ende und in der zweiten Struktur an seinem anderen Ende gehalten wird, wobei das Übertragungselement (260) ausfahrbar und einfahrbar und ausgebildet ist, der Bewegung des Antriebshalteelements (230) zu folgen, wodurch eine gewisse Ausfahr/Einfahrposition des Übertragungselements (260) einer gewissen Position der zweiten Struktur (220) relativ zu der ersten Struktur (210) entspricht, wobei das Computerprogrammprodukt ausgebildet ist, einen elektrischen Kontakt zu der einen oder den mehreren Enteisungsanordnungen zwischen den zwei Strukturen mittels eines Übertragungselements (260) derart zu steuern, dass ein elektrischer Kontakt in mindestens zwei unterschiedlichen Kontaktbereichen (414; 502; 607) auf dem Übertragungselement (260) hergestellt wird, wobei jeder Kontaktbereich (414; 502; 607) einer anderen vorbestimmten Ausfahr/Einfahrposition des Übertragungselements (260) entspricht, wobei die Übertragung elektrischer Leistung und/oder von Informationssignalen zu der einen oder den mehreren Enteisungsanordnungen intermittierend so ausgeführt wird, dass eine Übertragung nicht ausgeführt wird, wenn das Übertragungselement (260) in Bewegung ist, sondern nur dann ausgeführt wird, wenn das Übertragungselement (260) in einer der vorbestimmten Ausfahr/Einfahrpositionen ist, wenn das Computerprogramm in einem Computer (900) ausgeführt wird.

## Revendications

1. Procédé de transfert d'énergie électrique et/ou de signaux d'information entre une première structure (210) et une seconde structure (220), ladite seconde structure (220) étant mobile par rapport à la première structure (210) à l'aide d'un élément de support d'entraînement (230), et ladite première et/ou seconde structure (210 ; 220) étant munie d'un ou d'une pluralité de systèmes de dégivrage,
le procédé comprenant l'étape suivante :
- prévoir (s701) un élément de transfert (260) prévu pour transférer une énergie électrique et/ou des signaux d'information et/ou des signaux de mesure entre la première structure (210) et la seconde structure (220), dans lequel ledit élément de transfert (260) est prévu pour transférer une énergie électrique destinée aux systèmes de dégivrage, des informations destinées à contrôler les systèmes de dégivrage, et/ou des signaux de mesure qui proviennent des systèmes de dégivrage, dans lequel ledit élément de transfert (260) est supporté dans la première structure (210) à une extrémité et, dans la seconde structure (220), à son autre extrémité, dans lequel l'élément de transfert (260) est extensible et rétractable et est prévu pour suivre le mouvement de l'élément de support d'entraînement (230), moyennant quoi une certaine position d'extension/de rétraction de l'élément de transfert (260) correspond à une certaine position de la seconde structure (220) par rapport à la première structure (210),
**caractérisé par** l'étape :
- contrôler (s702) le contact électrique entre les deux structures (210 ; 220) à l'aide de l'élément de transfert (260) de façon à assurer un contact électrique dans au moins deux zones de contact différentes (414 ; 502 ; 607) sur l'élément de transfert (260), chaque zone de contact (414 ; 502 ; 607) correspondant à une position d'extension/de rétraction prédéterminée différente dudit élément de transfert (260), dans lequel ledit transfert d'énergie électrique et/ou de signaux d'information est effectué par intermittence tant que le transfert n'est pas effectué lors du déplacement dudit élément de transfert (260), mais uniquement lorsque ledit élément de transfert (260) se trouve dans l'une desdites positions d'extension/de rétraction prédéterminées.

2. Procédé selon la revendication 1, dans lequel la première structure (210) comprend au moins un élément de contact (401 ; 501 ; 601) qui assure un contact au niveau des zones de contact (414 ; 502 ; 607) entre au moins un fil métallique (411) de la première structure (210) et au moins un trajet conducteur (412) qui s'étend le long de l'élément de transfert (260, 413), vers la seconde structure (220), dans lequel l'élément de contact (401 ; 501 ; 601) est prévu pour être en position ouverte lors du déplacement dudit élément de transfert (260, 413), et en position fermée lorsque l'élément de transfert (260, 413) se trouve dans une position d'extension/de rétraction prédéterminée.

3. Procédé selon l'une des revendications 1 ou 2, dans lequel un mode de transfert par rapport auxdites zones de contact (607) est activé ou désactivé en tournant ledit élément de transfert (605) autour de son propre axe longitudinal.

4. Procédé selon la revendication 2, dans lequel un mode de transfert par rapport auxdites zones de contact (607) est activé ou désactivé en tournant ledit au moins un élément de contact le long d'un axe de rotation concentrique avec l'élément de transfert (605) en contact ou non avec ledit élément de transfert (605).

5. Procédé selon la revendication 2, dans lequel un mode de transfert par rapport auxdites zones de contact (414 ; 502) est activé ou désactivé à l'aide d'une configuration de fixation pour mettre en contact ladite première structure (210) avec ledit élément de transfert (413 ; 505) dans lesdites positions d'extension/de rétraction prédéterminées.

6. Système de dégivrage qui comprend :
- une première structure (210) et une seconde structure (220), ladite seconde structure (220) étant mobile par rapport à la première structure (210) à l'aide d'un élément de support d'entraînement (230), et ladite première et/ou seconde structure (210 ; 220) étant munie d'un ou d'une pluralité de systèmes de dégivrage,
et
- un élément de transfert (260) prévu pour transférer une énergie électrique et/ou des signaux d'information et/ou des signaux de mesure entre la première structure et la seconde structure, dans lequel ledit élément de transfert (260) est prévu pour transférer une énergie électrique destinée aux systèmes de dégivrage, des informations destinées à contrôler les systèmes de dégivrage, et/ou des signaux de mesure qui proviennent des systèmes de dégivrage, dans lequel ledit élément de transfert (260) est supporté dans la première structure (210) à une extrémité et, dans la seconde structure (220), à son autre extrémité, dans lequel l'élément de transfert (260) est extensible et rétractable et est prévu pour suivre le mouvement de l'élément de support d'entraînement (230), moyennant quoi une certaine position d'extension/de rétraction de l'élément de transfert (260) correspond à une certaine position de la seconde structure (220) par rapport à la première structure (210),
**caractérisé en ce que** le système comprend en outre :
- au moins deux zones de contact différentes (414 ; 502 ; 607) sur l'élément de transfert (260), afin d'assurer un contact électrique entre les deux structures (210 ; 220) à l'aide dudit élément de transfert (260), chaque zone de contact (414 ; 502 ; 607) correspondant à une position d'extension/de rétraction prédéterminée différente dudit élément de transfert (260),
dans lequel ledit système est prévu pour contrôler le transfert d'énergie électrique et/ou de signaux d'information, de sorte que le transfert ne soit pas effectué lors du déplacement dudit élément de transfert (260), mais uniquement lorsque ledit élément de transfert (260) se trouve dans l'une desdites positions d'extension/de rétraction prédéterminées.

7. Système selon la revendication 6, dans lequel la première structure (210) comprend au moins un élément de contact (401 ; 501 ; 601) prévu pour assurer un contact au niveau des zones de contact (414 ; 502 ; 607) entre au moins un fil métallique (411) de la première structure (210) et au moins un trajet conducteur (412) qui s'étend le long de l'élément de transfert (260, 413), vers la seconde structure (220), dans lequel l'élément de contact (401 ; 501 ; 601) est prévu pour être en position ouverte lors du déplacement dudit élément de transfert (260, 413), et en position fermée lorsque l'élément de transfert (260, 413) se trouve dans une des positions d'extension/de rétraction prédéterminée.

8. Système selon la revendication 7, dans lequel le au moins un élément de contact (601) s'étend vers l'intérieur depuis un support de contact creux (608) concentrique avec l'élément de transfert (260, 605), et dans lequel ledit système est prévu pour activer ou désactiver un mode de transfert par rapport auxdites zones de contact (607) en tournant ledit support de contact creux (608) autour de son axe pour entrer en contact ou ne plus être en contact avec au moins une partie en saillie (606) de l'élément de transfert (260, 605).

9. Système selon l'une quelconque des revendications 6 ou 7, dans lequel ledit système est prévu pour activer ou désactiver un mode de transfert par rapport auxdites zones de contact (414 ; 502) à l'aide d'une configuration de fixation pour mettre en contact ladite première structure (210) avec ledit élément de transfert (260) dans lesdites positions d'extension/de rétraction prédéterminées.

10. Plate-forme (100 ; 110) qui comprend le système selon l'une quelconque des revendications 6 à 9.

11. Plate-forme selon la revendication 10, dans laquelle ladite plate-forme est une installation stationnaire.

12. Programme informatique (P) qui comprend un code de programme destiné à transférer une énergie électrique et/ou des signaux d'information et/ou des signaux de mesure entre une première structure (210) et une seconde structure (220), ladite seconde structure (220) étant mobile par rapport à la première structure (210) à l'aide d'un élément de support d'entraînement (230), ladite première et/ou seconde structure (210 ; 220) étant munie d'un ou d'une pluralité de systèmes de dégivrage, dans lequel un élément de transfert (260) est prévu pour transférer une énergie électrique destinée aux systèmes de dégivrage, des informations destinées au contrôle des systèmes de dégivrage, et/ou des signaux de mesure qui proviennent des systèmes de dégivrage, dans lequel ledit élément de transfert (260) est supporté dans la première structure (210) à une extrémité et, dans la seconde structure (220), à son autre extrémité, dans lequel l'élément de transfert (260) est extensible et rétractable et est prévu pour suivre le mouvement de l'élément de support d'entraînement (230), moyennant quoi une certaine position d'extension/de rétraction de l'élément de transfert (260) correspond à une certaine position de la seconde structure (220) par rapport à la première structure (210), comprenant l'étape suivante:
- contrôler le contact électrique avec les systèmes de dégivrage entre les deux structures (210 ; 220) à l'aide de l'élément de transfert (260) de façon à assurer un contact électrique dans au moins deux zones de contact différentes (414 ; 502 ; 607) sur l'élément de transfert (260), chaque zone de contact (414 ; 502 ; 607) correspondant à une position d'extension/de rétraction prédéterminée différente dudit élément de transfert (260), dans lequel ledit transfert de l'énergie électrique et/ou des signaux d'information vers les systèmes de dégivrage est effectué par intermittence tant que le transfert n'est pas effectué lors du déplacement dudit élément de transfert (260), mais uniquement lorsque ledit élément de transfert (260) se trouve dans l'une desdites positions d'extension/de rétraction prédéterminées, lorsque ledit programme informatique est exécuté sur un ordinateur (900).

13. Produit de programme informatique qui comprend un code de programme stocké sur un support lisible par un ordinateur afin de transférer une énergie électrique et/ou des signaux d'information et/ou des signaux de mesure entre une première structure (210) et une seconde structure (220), ladite seconde structure (220) étant mobile par rapport à la première structure (210) à l'aide d'un élément de support d'entraînement (230), ladite première et/ou seconde structure (210 ; 220) étant munie d'un ou d'une pluralité de systèmes de dégivrage, dans lequel un élément de transfert (260) est prévu pour transférer une énergie électrique destinée aux systèmes de dégivrage, des informations destinées au contrôle des systèmes de dégivrage, et/ou des signaux de mesure qui proviennent des systèmes de dégivrage, dans lequel ledit élément de transfert (260) est supporté dans la première structure à une extrémité et, dans la seconde structure, à son autre extrémité, dans lequel l'élément de transfert (260) est extensible et rétractable et est prévu pour suivre le mouvement de l'élément de support d'entraînement (230), moyennant quoi une certaine position d'extension/de rétraction de l'élément de transfert (260) correspond à une certaine position de la seconde structure (220) par rapport à la première structure (210), ledit produit de programme informatique étant configuré pour contrôler le contact électrique avec les systèmes de dégivrage entre les deux structures à l'aide d'un élément de transfert (260) de façon à assurer un contact électrique dans au moins deux zones de contact différentes (414 ; 502 ; 607) sur l'élément de transfert (260), chaque zone de contact (414 ; 502 ; 607) correspondant à une position d'extension/de rétraction prédéterminée différente dudit élément de transfert (260), dans lequel ledit transfert d'énergie électrique et/ou de signaux d'information vers les systèmes de dégivrage est effectué par intermittence tant que le transfert n'est pas effectué lors du déplacement dudit élément de transfert (260), mais uniquement lorsque ledit élément de transfert (260) se trouve dans l'une desdites positions d'extension/de rétraction prédéterminées, lorsque ledit programme informatique est exécuté sur un ordinateur (900).
